# EUROPEAN PATENT APPLICATION

(11) **EP 1 944 683 A1**
(43) Date of publication of application: **16.07.2008**
(21) Application number: 07110839.3
(22) Date of filing: 22.06.2007
(51) Int. Cl.: G06F 3/048

(54) **Gesture-based user interface method and apparatus**

(30) Priority: 04.12.2006 KR 20060121784
(71) Applicant: Samsung Electronics Co., Ltd., Yeongtong-gu Suwon-city, Gyeonggi-do 442-742 (KR)
(72) Inventor: Han, Sang-jun, Dongjak-gu Seoul (KR)
(74) Representative: Perkins, Dawn Elizabeth

(57) **Abstract**

Provided is a gesture-based user interface method and apparatus to improve convenience in manipulation of the gesture-based user interface. The gesture-based user interface method includes detecting an input position, determining at least one gesture that can be input in the detected position, and displaying at least one guide corresponding to the determined at least one gesture on a screen.

## Description

Methods and apparatuses consistent with the present invention relate to a user interface, and more particularly, to a gesture-based user interface method and apparatus to improve convenience in manipulation of the user interface.

A gesture-based interface generally provides a guide for gestures that have to be input by a user through a metaphor used in a user interface or a help item. With this type of guide, however, inexperienced users may repeat mistakes while manipulating a gesture-based user interface until they memorize the gestures.

The present invention provides a gesture-based user interface method and apparatus to make it easier for users to use a gesture-based user interface, and a computer-readable recording medium having recorded thereon a program for implementing the gesture-based user interface method.

According to one aspect of the present invention, there is provided a gesture-based user interface method including detecting an input position, determining at least one gesture that can be input in the detected position, and displaying at least one guide corresponding to the determined at least one gesture on a screen.

The detection of the input position may include detecting a position touched using a touch-based input device at predetermined time intervals.

The gesture-based user interface method may further include virtually dividing the screen into at least one region and assigning at least one gesture that can be input to each of the at least one region.

The displaying of the at least one guide on the screen may include determining at least one image introducing the determined at least one gesture as guides to be displayed on the screen.

The gesture-based user interface method may further include changing the at least guides displayed on the screen according to a change of the input position.

The gesture-based user interface method may further include removing the displayed at least one guide from the screen if the input position is not further detected.

According to another aspect of the present invention, there is provided a gesture-based user interface apparatus including a gesture input unit, a gesture processing unit, and a central processing unit. The gesture input unit detects an input position. The gesture processing unit determines at least one gesture that can be input in the detected position. The central processing unit reads at least one guide corresponding to the determined at least one gesture from a storing unit and displaying the read guides on a screen.

The above and other features and aspects of the present invention will become more apparent by describing in detail exemplary embodiments thereof with reference to the attached drawings in which:
Figure 1 is a block diagram of a gesture-based user interface apparatus according to an exemplary embodiment of the present invention;
Figure 2 is a flowchart of a gesture-based user interface method according to an exemplary embodiment of the present invention;
Figure 3 is a flowchart of a gesture-based user interface method according to another exemplary embodiment of the present invention;
Figure 4 illustrates a relationship between guide images and gestures according to an exemplary embodiment of the present invention;
Figure 5 illustrates an example of a screen that is virtually divided according to an exemplary embodiment of the present invention;
Figure 6 illustrates another example of a screen that is virtually divided according to an exemplary embodiment of the present invention;
Figure 7 illustrates an example of a guide image displayed on a screen according to an exemplary embodiment of the present invention;
Figure 8 illustrates another example of a guide image displayed on a screen according to an exemplary embodiment of the present invention;
Figure 9 illustrates an example of two guide images displayed on a screen according to an embodiment of the present invention;
Figure 10 illustrates another example of a guide image displayed on a screen according to an exemplary embodiment of the present invention; and
Figure 11 illustrates an example of a guide image changed according to a change in an input position in the screen illustrated in Figure 10.

Hereinafter, exemplary embodiments of the present invention will be described in detail with reference to the accompanying drawings.

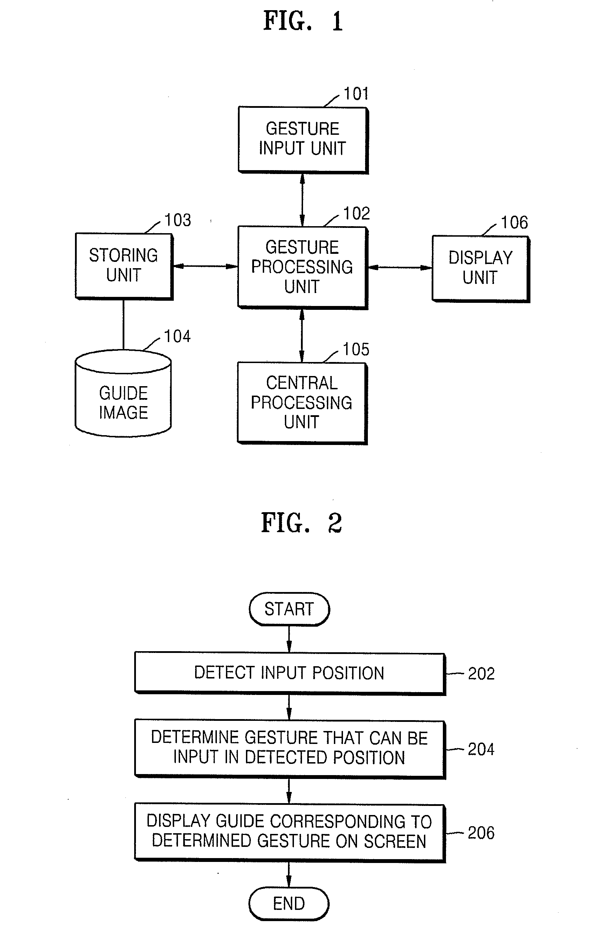

Figure 1 is a block diagram of a gesture-based user interface apparatus according to an exemplary embodiment of the present invention.

Referring to Figure 1, a gesture-based user interface apparatus includes a gesture input unit 101 for inputting a gesture from a user, a storing unit 103, a display unit 106, a gesture processing unit 102 for recognizing a gesture input through the gesture input unit 101 so as to determine an operation corresponding to the gesture and predicting a gesture that can be input or is valid in an input position detected by the gesture input unit 101, and a central processing unit 105 for performing the operation determined by the gesture input unit 101 and reading a guide image 104 corresponding to the predicted gesture from the storing unit 103 so as to display the guide image 104 on the display unit 106. Details of these components will be described with reference to Figures 2 through 11.

Figure 2 is a flowchart of a gesture-based user interface method according to an exemplary embodiment of the present invention.

Referring to Figure 2, the gesture input unit 101 detects a user's input position if there is an input from a user in operation 202. The gesture input unit 101 may be, without being limited to, a touch-based input device such as a touch screen or a touch pad for detecting a user's touch position at predetermined time intervals, but may also be other types of input devices such as mouse devices. The gesture processing unit 102 determines a gesture that can be input in the detected input position in operation 204. In other words, if the user starts a gesture input operation, the gesture processing unit 102 predicts a gesture intended by the user based on the user's input position. The central processing unit 105 overlays a guide introducing the gesture predicted by the gesture processing unit 102 on the display unit 106. The guide may be displayed in the form of an image and is read from the storing unit 103 that stores the guide images 104 corresponding to gestures.

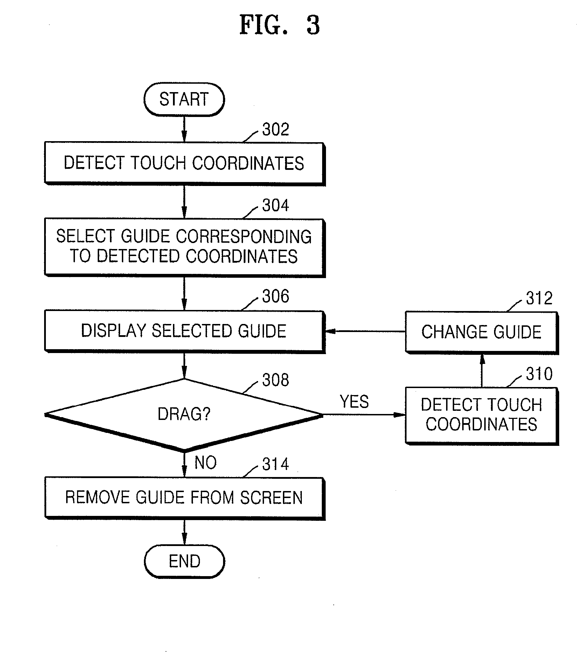

Figure 3 is a flowchart of a gesture-based user interface method according to another exemplary embodiment of the present invention, in which a touch screen is used as the gesture input unit 101.

Referring to Figure 3, the gesture input unit 101 detects coordinates touched by a user's finger or stylus. These coordinates will be referred to hereinafter as touch coordinates, in operation 302. When the user first touches the touch screen, the gesture processing unit 102 determines a gesture that is available in an area including the touch coordinates. The central processing unit 105 selects a guide for the determined gesture in operation 304. An image corresponding to the selected guide, which will be referred to hereinafter as a guide image, is displayed around the touch coordinates in operation 306. Once the user moves while in touch with the screen, i.e., the user drags the finger or stylus, in order to change the touch coordinates in operation 308, the gesture input unit 101 continues detecting the changed touch coordinates in operation 310. The central processing unit 105 also changes the guide image according to the moved touch coordinates and displays the changed guide image on the screen in operation 312. If the user moves the finger or stylus off from the screen and thus no touch coordinates are further detected, the guide image is removed from the screen in operation 314.

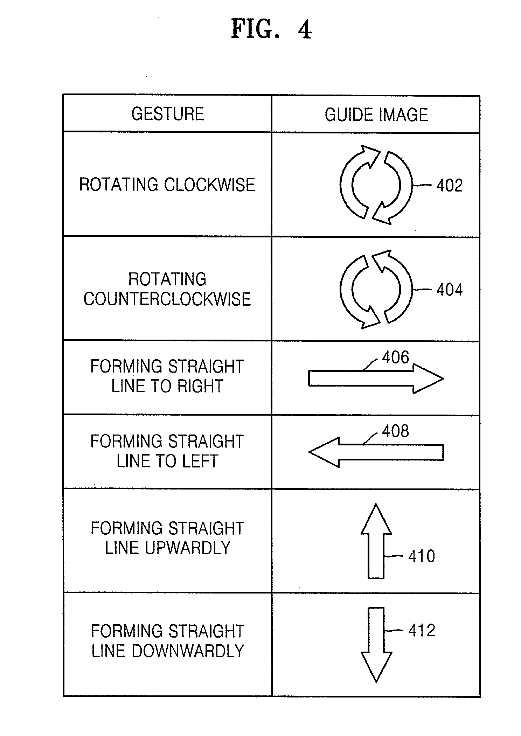

Figure 4 illustrates a relationship between guide images and gestures according to an exemplary embodiment of the present invention, in which gestures that can be input and guide images that can be displayed for the gestures are illustrated.

Referring to Figure 4, if a gesture "rotating clockwise" is predicted, a clockwise rotation image 402 corresponding to the predicted gesture is displayed. If a gesture "rotating counterclockwise" is predicted, a counterclockwise rotation image 404 is displayed. If a gesture "forming a straight line to the right" is predicted, a right-oriented arrow image 406 is displayed. If a gesture "forming a straight line to the left" is predicted, a left-oriented arrow image 408 is displayed. If a gesture "forming a straight line upwards" is predicted, an upward arrow image 410 is displayed. If a gesture "forming a straight line downwards" is predicted, a downward arrow image 412 is displayed. These gestures may implement an upward scroll function, a downward scroll function, an enter function, a back function, a volume-up function, and a volume-down function. However, these gestures and guide images and functions corresponding thereto are only examples and may vary with exemplary embodiments as is obvious to those of ordinary skill in the art.

According to an exemplary embodiment of the present invention, in order to determine a gesture that can be input by the user according to the detected input position, the gesture processing unit 102 may virtually divide the screen into at least one region and assign available gestures to the regions. In other words, it is determined in which region coordinates that are first touched by the user for performing a gesture input operation are included and a guide corresponding to a gesture that is predicted as being available in the determined region is displayed around the touch coordinates.

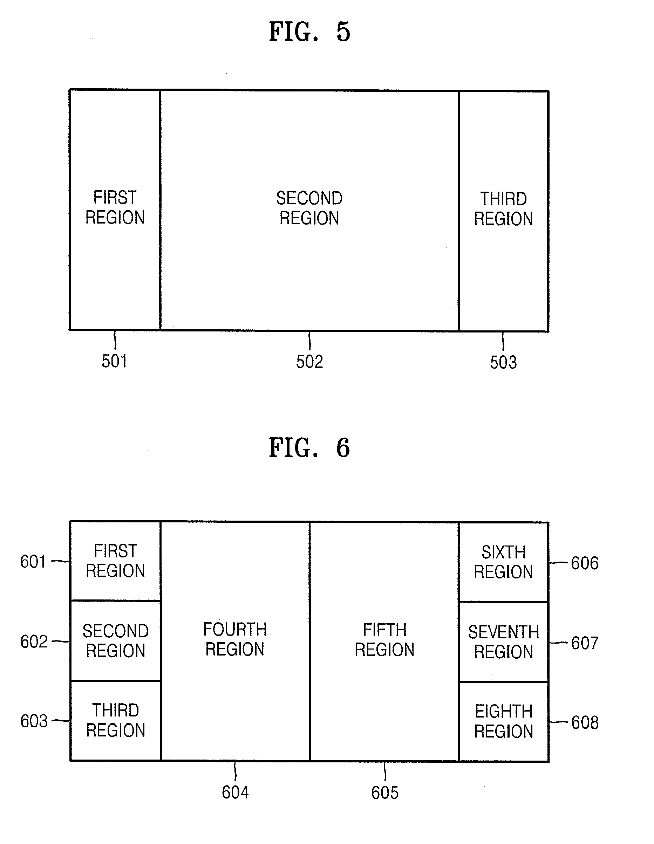

Figure 5 illustrates an example of a screen that is virtually divided according to an exemplary embodiment of the present invention.

Referring to Figure 5, the screen is divided into first through third regions 501 through 503. A valid gesture and a guide image corresponding thereto are assigned to each of the first through third regions 501 through 503. For example, the gesture "forming a straight line to the right" may be assigned to the first region 501, and the right-oriented arrow image 406 may be displayed as a guide for a gesture input when the user first touches the first region 501 for performing- a gesture input operation. The gesture "rotating" may be assigned to the second region 502, and the clockwise rotation image 402 or the counterclockwise rotation image 404 as a guide for a gesture input may be displayed when the user first touches the second region 502 for the gesture input operation. Optionally, after a circular image having no directivity is displayed as a guide, the guide image may be updated with the clockwise rotation image 402 or the counterclockwise rotation image 404 according to a user's dragging direction. The gesture "forming a straight line to the left" may be assigned to the third region 503, and the left-oriented arrow image 408 may be displayed when the user first touches the third region 503 for performing the gesture input.

Figure 6 illustrates another example of a screen that is virtually divided according to an exemplary embodiment of the present invention.

Referring to Figure 6, the screen is divided into first through eighth regions 601 through 608. A valid gesture and a guide image corresponding thereto are assigned to each of the first through eighth regions 601 through 608. For example, the gesture "forming a straight line downwards" and the downward arrow image 412 may be assigned to the first region 601; the gesture "forming a straight line to the right" and the right-oriented arrow image 406 may be assigned to the second region 602; the gesture "forming a straight line upwards" and the upward arrow image 410 may be assigned to the third region 603; the gesture "rotating counterclockwise" and the counterclockwise rotation image 404 may be assigned to the fourth region 604; the gesture "rotating clockwise" and the clockwise rotation image 402 may be assigned to the fifth region 605; the gesture "forming a straight line to the left" and the left-oriented arrow image 412 may be assigned to the sixth region 606; the gesture "forming a straight line to the left" and the left-oriented arrow image 408 may be assigned to the seventh region 607; and the gesture "forming a straight line upwards" and the upward arrow image 410 may be assigned to the eighth region 608.

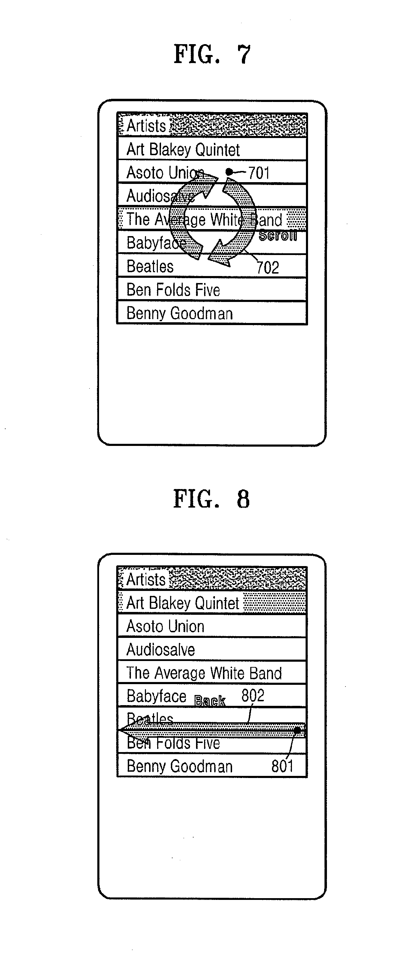

Figures 7 through 11 illustrate the application of exemplary embodiments of the present invention to contents searching of a mobile device.

Figure 7 illustrates an example of a guide image displayed on a screen according to an exemplary embodiment of the present invention, in which the screen is virtually divided into the first through third regions 501 through 503 as illustrated in Figure 5. Since a position 701 input or touched by the user corresponds to the second region 502, a guide image 702 corresponding to a scroll function is displayed. The user can easily input a gesture by referring to the displayed guide image 702. In the current exemplary embodiment of the present invention, a guide also indicates that a function corresponding to the gesture "rotating clockwise" is "SCROLL" and thus users can immediately check if they have correctly input their desired gesture.

Figure 8 illustrates another example of a guide image displayed on a screen according to an exemplary embodiment of the present invention, in which a position 801 corresponding to the third region 503 illustrated in Figure 5 is touched. In this case, a guide image 802 introducing the gesture "forming a straight line to the left" is displayed.

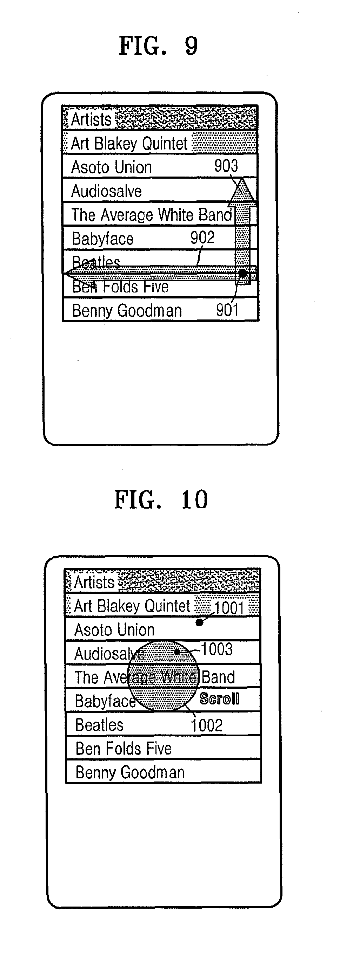

A plurality of gestures may also be assigned to a single region. In this case, a plurality of guide images is assigned to the single region. Figure 9 illustrates an example of two guide images displayed on a screen according to an exemplary embodiment of the present invention, in which two gestures "forming a straight line to the left" and "forming a straight line upwards" are assigned to a region including a first touch position 901. In this case, two guide images 902 and 903 are displayed upon user's touch of the position 901. Thus, the user can select a gesture corresponding to a desired function and input the gesture according to a guide image corresponding to the selected gesture.

Figure 10 illustrates another example of a guide image displayed on a screen according to an exemplary embodiment of the present invention. If the user first touches a first position 1001 included in the center of the screen, a jog-shuttle controller guide image 1002 corresponding to the gesture "rotating" and the scroll function is overlaid on a screen showing a contents list. The guide image 1002 includes an image 1003 indicating the amount of rotation of the jog-shuttle controller.

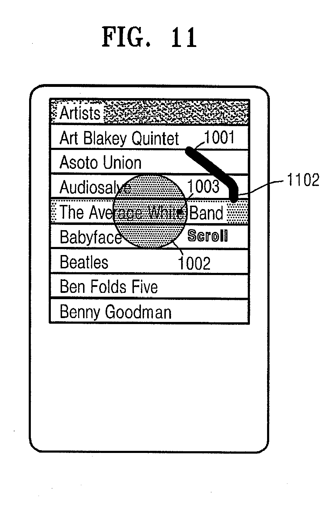

Figure 11 illustrates an example of a guide image changed according to a change in an input position in the screen illustrated in Figure 10. Once the user drags from the first position 1001 to a second position 1102, the jog shuttle controller also rotates and the position of an image 1003 indicating the amount of rotation is also changed.

The gesture-based user interface method according to the present invention can be embodied, for example, as code that is readable by a computer on a computer-readable recording medium.

As described above, according to an aspect of the present invention, a guide for an available gesture is displayed on a screen when a user starts a gesture input operation, thereby making it easier for the user to be familiar with a gesture-based user interface.

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. A gesture-based user interface method comprising:
detecting an input position;
determining at least one gesture input in the detected input position; and
displaying at least one guide corresponding to the determined at least one gesture on a screen.

2. The gesture-based user interface method of claim 1, wherein the detecting of the input position comprises detecting a position touched using a touch-based input device at predetermined time intervals.

3. The gesture-based user interface method of claim 1 or 2, further comprising:
dividing the screen into regions; and
assigning a gesture to each of the regions.

4. The gesture-based user interface method of any one of the preceding claims, wherein the displaying of the at least one guide on the screen further comprises determining at least one image corresponding to the at least one gesture as the guide to be displayed on the screen.

5. The gesture-based user interface method of any one of the preceding claims, further comprising changing the at least one guide displayed on the screen according to a change of the input position.

6. The gesture-based user interface method of any one of the preceding claims, further comprising removing the displayed at least one guide from the screen if the input position is not detected.

7. The gesture-based user interface method of any one of the preceding claims, wherein the detected input position is on the screen.

8. The gesture-based user interface method of any one of the preceding claims, wherein the at least one gesture is determined based on a region of a touch-based input device within which the input position is contained.

9. The gesture based user interface method of any one of the preceding claims, wherein the at least one gesture is determined based on changes in the input position.

10. A computer-readable recording medium having recorded thereon a program for implementing the gesture-based user interface method of any one of the preceding claims.

11. A gesture-based user interface apparatus comprising:
a gesture input unit (101) operable to detect an input position;
a gesture processing unit (102) operable to determine at least one gesture that can be input in the detected input position; and
a central processing unit (105) operable to read at least one guide corresponding to the determined at least one gesture from a storing unit (103) and display the at least one guide on a screen.

12. The gesture-based user interface apparatus of claim 11, wherein the gesture input unit (101) is a touch-based input device that detects a position touched by a user at predetermined time intervals.

13. The gesture-based user interface apparatus of claim 11 or 12, wherein the gesture processing unit (101) is operable to divide the screen into regions and assign a gesture to each of the regions.

14. The gesture-based user interface apparatus of claim 11, 12 or 13, wherein the central processing unit (105) is operable to determine at least one image corresponding to the at least one gesture as the guide to be displayed on the screen.

15. The gesture-based user interface apparatus of any one of claims 11 to 14, wherein the central processing unit (105) is operable to change the at least one guide displayed on the screen according to a change of the input position.

16. The gesture-based user interface apparatus of any one of claims 11 to 15, wherein the central processing unit (105) is operable to remove the displayed at least one guide from the screen if the input position is not detected.
